# EUROPÄISCHE PATENTSCHRIFT

(11) **EP 0 522 103 B1**
(45) Veröffentlichungstag und Bekanntmachung des Hinweises auf die Patenterteilung: **06.12.1995**
(21) Anmeldenummer: 92902150.9
(22) Anmeldetag: 17.01.1992
(51) Int. Cl.: E02D 31/00, B09B 1/00

(54) **VORRICHTUNG UND VERFAHREN ZUM KONTROLLIEREN UND REPARIEREN VON ABDICHTUNGEN**
METHOD AND DEVICE FOR CHECKING AND REPAIRING WATERPROOFING
DISPOSITIF ET PROCEDE POUR LE CONTROLE ET LA REPARATION DE REVETEMENTS D'ETANCHEITE

(30) Priorität: 21.01.1991 DE 4101565
(43) Veröffentlichungstag der Anmeldung: 13.01.1993
(73) Patentinhaber: Richter, Hans, D-86163 Augsburg (DE)
(72) Erfinder: Richter, Hans, D-86163 Augsburg (DE)
(74) Vertreter: Charrier, Rolf, Dipl.-Ing.
(86) Internationale Anmeldenummer: EP9200083
(87) Internationale Veröffentlichungsnummer: WO9213143

(56) Entgegenhaltungen:
- WO-A-86/04943
- WO-A-88/06929
- DE-A- 3 706 869
- US-A- 4 696 599

## Beschreibung

Die Erfindung betrifft ein Verfahren zum Kontrollieren und Reparieren von Basis- und Oberflächenabdichtungen von Mülldeponien oder anderen Objekten nach dem Oberbegrif des Anspruchs 1 und eine Vorichtung zur Durchführung des Verfahrens.

Derartige Abdichtungen werden heute als Kombinationsdichtungen, bestehend aus einer oder mehreren Schichten mineralischen Materials kombiniert mit Kunststoffbahnen, ausgeführt. Die Anforderungen an deren Dichtigkeit sind sehr hoch.

Zur Feststellung eventueller Undichtigkeiten gibt es das unter 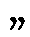 LEOS 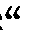 bekannt gewordene Verfahren, bei dem gaschurchlässige Rohre in die Kombinationsdichtschicht eingelegt sind. Durch partielle Undichtigkeiten dringt Gas in das Rohr. Durch Verschieben der Luftsäule im Rohr wird der mit Gas angereicherte Bereich mit aus dem Rohr herausgeschoben, so daß am Ende des Rohres die Lage der Undichtigkeit durch Rückrechnung festgestellt werden kann. Das Verfahren ist unsicher in seinen Meßergebnissen, da die Poren des Rohres leicht verstopfen und Vermischungen in der Luftsäule und im Wasser entstehen können. Eine Reparatur der Undichtigkeiten ist nur bei Oberflächenabdichtungen durch Aufgraben der aufliegenden Erdschichten möglich. Für Basisabdichtungen besteht dabei keine Möglichkeit der Reparatur.

Ein weiteres bekanntgewordenes Verfahren arbeitet mit elektrisch leitfähigen Koordinatennetzen in der Kunststoffbahn zur Feststellung von Löchern. Eine Reparatur ist auch hier nicht möglich.

Nach der WO 86/04943 wird in einer Kontrollfilterschicht, die sich zwischen zwei Abdichtungsschichten befindet, ein erstes Leitungssystem verlegt, das in einem Sammelschacht mündet. In dieser Kontrollfilterschicht ist außerdem ein Injektionsleitungssystem verlegt. Die Kontrollfilterschicht ist rasterförmig unterteilt, wobei jede Rasterflache gegenüber der benachbarten Rasterfläche abgedichtet ist und jede Rasterfläche erste Leitungen und Injektionsleitungen aufweist. Tritt bei einer Rasterfläche eine Undichtigkeit auf, wird die dort in die Kontrollfilterschicht eindringende Flüssigkeit von den ersten Leitungen in den Leitungsschacht abgeleitet, womit die Rasterfläche bestimmbar ist, bei welcher die Undichtigkeit auftritt. Bei dieser Rasterfläche wird dann über die Injektionsleitungen ein Dichtungsmittel in die Kontrollfilterschicht eingebracht.

Es besteht die Aufgabe, eine Vorrichtung und ein Verfahren zu schaffen, das diese Nachteile nicht besitzt.

Gelöst wird diese Aufgabe mit den kennzeichnenden Merkmalen des Anspruches 1 bzw. 5. Vorteilhafte Ausgestaltungen sind den abhängigen Ansprüchen entnehmbar.

Ausführungsbeispiele der vorliegenden Erfindung werden nachfolgend an Hand der Zeichnungen näher erläutert. Es zeigen:

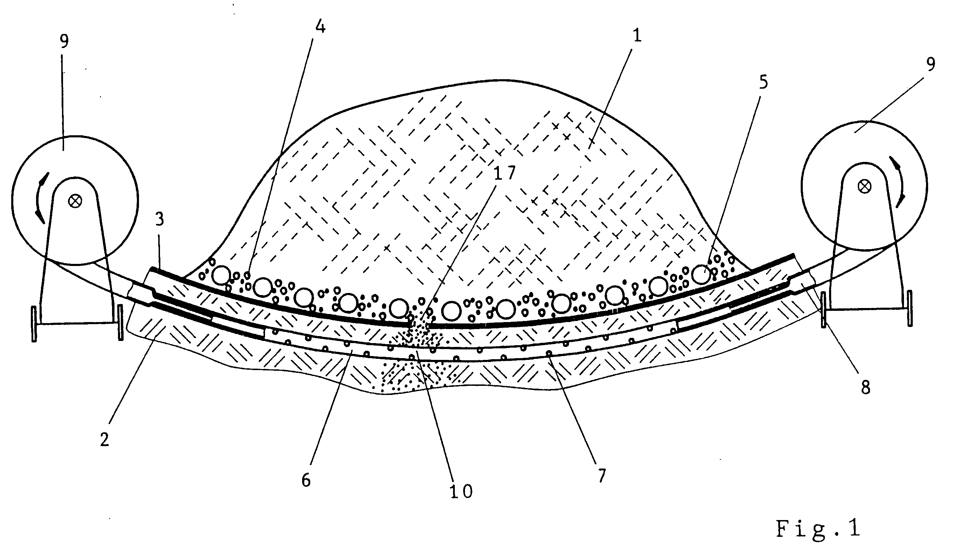

- **Fig. 1**: einen Querschnitt durch eine Mülldeponie mit einer Basisabdichtung und versehen mit der erfindungsgemäßen Vorrichtung; und
- **Fig. 2**: einen vergrößerten Ausschnitt aus der Figur 1 der erfindungsgemäßen Vorrichtung.

Unter der Deponie 1 ist wannenartig eine Kombinationsdichtung, bestehend aus einer mineralischen Schicht 2, einer Kunststoffbahn 3 und einer Kiesschicht 4 mit darinliegenden Drainagerohren 5 eingebaut. Unterhalb der Kunststoffbahn 3 ist ein Operationsrohrnetz 6 mit seinen Öffnungen 7 angeordnet. In das Operationsrohrnetz 6 ist der Luftschlauch 8 eingeführt, der rechts und links auf Kabelrollen 9 aufgewickelt ist. Der Luftschlauch 8 steht während der Kontroll- und Reparaturphase unter Luftdruck, so daß er außerhalb der Operationsrohre 6 in seinem Außendurchmesser dicker ist, da er hier nicht durch das umschließende Operationsrohr 6 ummantelt ist.

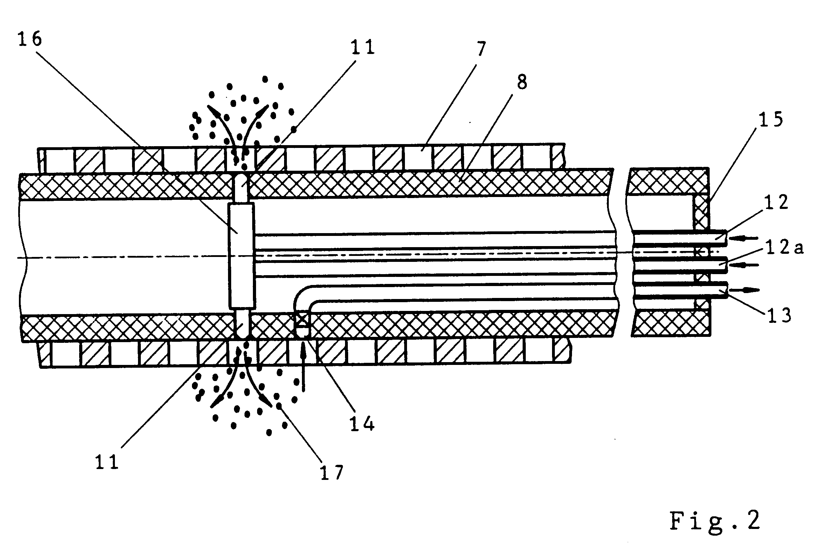

In Figur 2, welche die Einzelheit bei 10 zeigt, hat der Luftschlauch 8 mindestens zwei Öffnungen, 11, 14, an die die Schläuche 12 und 12a und 13 angeschlossen sind. An die radiale Öffnung 14 ist der Schlauch 13 angeschlossen. Die Schläuche 12, 12a und 13 sind an den Enden des Luftschlauches 8 durch die luftdichte Wand 15 nach außen geführt. Die Schläuche 12 und 12a sind in die Mischkammer 16 geführt, von wo aus Durchgang besteht zu den Öffnungen 11.

Mehrere Operationsrohre 6 sind in mehr oder weniger kleinen Abständen verlegt, je nach dem, wie die Kontrollier- und Reparierbarkeit der Basisabdichtung sein soll.

Zur Kontrolle und gegebenenfalls Reparatur eines Bereiches wird nun der Luftschlauch 8 in das Operationsrohr 6 eingeführt soweit, daß er am anderen Ende auf die Schlauchrolle 9 gelangt und der Mittelbereich mit den Öffnungen 11 und 14 an den Anfang des Operationsrohres 6 zu liegen kommt. Dann wird der Luftschlauch 8 mit Druckluft aufgeblasen. Dabei dehnt ei sich und verschließt alle Öffnungen 7 des Operationsrohres bis auf die, die im Bereich der Öffnungen 11 und 14 der Mitte der Länge des Luftschlauches 8 liegen.

Durch Saugen an dem Schlauch 13 vom Zetrum der Schlauchrolle 9 aus, wird festgestellt, ob ungewünschte Flüssigkeit an der betreffenden Stelle vorhanden ist oder nicht. Wenn ja, so wird über die Schläuche 12 und 12a eine Ein- bzw. Zweikomponenten-Dichtflüssigkeit 17 eingepreßt, die in der Mischkammer 16 vermischt wird und an den Öffnungen 11 durch die Perforation (Öffnungen 7) des Operationsrohres in die mineralische Schicht 2 der Abdichtung eindringt, dort aushärtet und damit die undicht gewordene Kunststoffbahn 3 bei 10 bzw. die darunter oder darüber liegenden weiteren Dichtschichten verschließt.

Erfindungsgemäß kann dieses Verfahren für alle Abdichtungsarten wie Sperrbeton, Asphalt, Bitumenpappe ect. Verwendung finden.

Nach diesem Vorgang wird die Luft aus dem Luftschlauch 8 abgelassen, durch Drehen der Schlauchrolle 9 im Operationsrohr 6 ein gewünschtes Stück verschoben und erneut aufgeblasen. Somit kann der Vorgang ständig wiederholt werden, bis das ganze Operationsrohr 6 kontrolliert und abgedichtet ist und anschließend alle weiteren in der Abdichtung verlegten.

## Patentansprüche

1. Verfahren zum Kontrollieren und Reparieren von Basis- und Oberflächenabdichtungen von Mülldeponien (1) oder anderen Objekten, bei dem mittels einer Perforation in der Rohrwandung eines etwa in der neutralen Mitte der im Querschnitt betrachteten Dicke der Abdichtung in vertikaler Richtung gesehen parallel zueinander verlegten Operationsrohrsystems (6) Undichtigkeiten gegen Flüssigkeiten durch Ansaugen ermittelt und durch Injektionen rapariert werden, **dadurch gekennzeichnet**, daß bis auf wenige alle Öffnungen (7) der Perforation in der Rohrwandung des Operationsrohres (6) fortlaufend jeweils verschlossen werden und über einige der wenigen jeweils offenen Öffnungen (7) festgestellt wird, ob ungewünschte Flüssigkeit ansteht, und über die anderen der jeweils offenen Öffnungen (7) im Mantel des Operationsrohres (6) Dichtungsmittel (17) eingepreßt werden, so lange, bis keine ungewünschte Flüssigkeit mehr ansteht.

2. Verfahren nach Anspruch 1, **dadurch gekennzeichnet**, daß die Dichtungsmittel (17) im Ein- oder Zweikomponentenverfahren eingebracht werden.

3. Verfahren nach Anspruch 1, **dadurch gekennzeichnet**, daß ein Druckschlauch (8) in einzelnen Schritten durch das Operationsrohr (6) gezogen wird, wobei jedesmal der Druckschlauch (8) aufgeblasen wird und durch einen weiteren im Druckschlauch (8) liegenden kleineren Schlauch (13) durch Ansaugen festgestellt wird, ob oder in welcher Qualität Wasser an der betreffenden Stelle ansteht.

4. Verfahren nach Anspruch 3, **dadurch gekennzeichnet**, daß durch einen oder mehrere weitere dünnere Schläuche (12, 12a) an die betreffende Stelle Ein- und Mehrkomponentendichflüssigkeit (17) eingepreßt wird.

5. Vorrichtung zur Durchführung des Verfahrens nach einem der Ansprüche 1 bis 4 unter Verwendung eines im Bereich der zu kontrollierenden und zu reparierenden Abdichtung verlegten Operationsrohrnetzes (6), bei dem die Rohrwandung durch Öffnungen (7) perforiert ist, **gekennzeichnet durch** einen an seinen Enden verschlossenen aufblasbaren, begrenzt radial dehnbaren, in seinem Außendurchmesser dem Innendurchmesser des Operationsrohres (6) entsprechenden Druckschlauch (8) von etwa doppelter Länge des Operationsrohres (6), der in seiner Längsmitte mindestens zwei Rohrwandungsbohrungen (11, 14) hat, an welche je ein im Druckschlauch (8) verlegter wesentlich dünnerer Schlauch (12, 13) angeschlossen ist, der durch eines der druckdicht verschlossenen Schlauchenden nach außen geführt ist, wobei der eine Schlauch (13) als Ansaugschlauch und der andere Schlauch (12) als Injektionsschlauch dient.

6. Vorrichtung nach Anspruch 5, **dadurch gekennzeichnet**, daß Abdichtungen ganz oder teilweise mit Systemen von perforierten unmittelbar in der Abdichtung selbst verlegten Operationsrohren (6) versehen sind.

## Claims

1. Method for checking and repairing base and surface seals of refuse dumps (1) or other objects, whereby by means of perforation in the pipe wall of a system of operation pipes (6) laid parallel with one another viewed in the vertical direction roughly in the neutral middle of the thickness of the seal considered in cross-section, liquid leaks are discovered by suction and repaired by injections, characterised in that all except a few of the openings (7) of the perforation in the pipe wall of the operation pipe (6) are successively closed and some of the few open openings (7) are used to establish whether undesirable liquid is present, and the others of the open openings (7) in the jacket of the operation pipe (6) are used to inject sealing means (17) until no undesired liquid is present any more.

2. Method according to claim 1, characterised in that the sealing means (17) are introduced in the single-component or two-component process.

3. Method according to claim 1, characterised in that a pressure hose (8) is drawn through the operation pipe (6) a step at a time, and each time the pressure hose (8) is inflated and a further smaller hose (13) lying in the pressure hose (8) is used to establish by suction whether or in what quality water is present at the location concerned.

4. Method according to claim 3, characterised in that single-component and multi-component sealing liquid (17) is injected through one or more further thinner hoses (12, 12a) to the location concerned.

5. Device for implementing the method according to one of claims 1 to 4 using a network of operation pipes (6) laid in the area of the seal to be checked and to be repaired, wherein the pipe wall is perforated by openings (7), characterised by a pressure hose (8) which is sealed at its ends, inflatable, expandable radially to a limited degree, corresponds in its outside diameter to the inside diameter of the operation pipe (6), is roughly double the length of the operation pipe (6) and in its longitudinal middle has at least two pipe wall holes (11, 14) to which in each case is connected a much thinner hose (12, 13) laid in the pressure hose (8) and run out through one of the pressure tight sealed ends of the hose, one hose (13) serving as suction hose and the other hose (12) as injection hose.

6. Device according to claim 5, characterised in that seals are provided wholly or partially with systems of perforated operation pipes (6) laid directly in the seal itself.

## Revendications

1. Procédé de contrôle et de réparation de moyens d'étanchéité de fond et de surface utilisés pour couvrir des décharges (1) et autres objets, selon lequel d'éventuelles fuites sont détectées par aspiration et reparées par injection d'un produit par des perforations aménagées dans les parois des tuyaux d'un système de tuyaux principaux (6) qui, vus d'en haut, sont posés parallèlement les uns par rapport aux autres dans la zone centrale neutre de l'épaisseur des moyens d'étanchéité vus en coupe, **caractérisé en ce que** quasiment toutes les perforations (7), à part quelques unes, produites dans les parois des tuyauteries principales (6) sont fermées de manière continue et que les quelques perforations (7) restées ouvertes permettent de détecter s'il y du liquide indésirable ou non et que les autres perforations ouvertes (7) produites dans la paroi du tuyau principal (6) sont utilisées pour injecter un produit d'étanchéité (17) jusqu'à ce qu'aucun liquide indésirable ne soit plus détecté.

2. Procédé selon la revendication 1, caractérisée en ce que le produit d'étanchéité (17) est injecté par un procédé utilisant un ou à deux composants.

3. Procédé selon la revendication 1, caractérisée en ce qu'un flexible pressurisé (8) est introduit par différentes étapes dans le tuyau principal (6), le flexible pressurisé étant gonflé à chaque fois et qu'un deuxième flexible plus mince (13) inséré dans le flexible pressurisé (8) permet de vérifier, par aspiration, s'il y a de l'eau à un endroit donné et, dans le cas affirmatif, de quelle qualité elle est.

4. Procédé selon la revendication 3, caractérisée en ce qu'un ou plusieurs flexibles minces supplémentaires (12, 12a) sont utilisés pour injecter du liquide d'étanchéité (17) selon le procédé utilisant un ou à plusieurs composants aux endroits concernés.

5. Dispositif d'application du procédé selon l'une quelconque des revendications 1 à 4 comprenant un réseau de tuyaux principaux (6) posés dans la zone des moyens d'étanchéité à contrôler et à réparer, ledit réseau présentant des tuyaux dont les parois présentent des perforations (7), caractérisé par un flexible pressurisé (8) d'une longueur deux fois supérieure à celle du tuyau principal (6), le flexible étant fermé à l'une de ses extrémités, gonflable et extensible de manière limitée dans le sens radial, avec un diamètre extérieur correspondant au diamètre intérieur du tuyau principal (6) et présentant dans son centre, vu dans le sens longitudinal, au moins deux perforations (11, 14) dans la paroi dans lesquelles est raccordé un flexible (12, 13) plus mince posé dans le flexible pressurisé (8) et amené vers l'extérieur à travers l'une des extrémités étanchéifiée du flexible (8) de sorte que le premier flexible (13) soit utilisé comme flexible d'aspiration et que l'autre flexible (12) soit utilisé comme flexible d'injection.

6. Dispositif selon la revendication 5, caractérisé en ce que les moyens d'étanchéité sont munis, en totalité ou en partie, de systèmes de tuyaux principaux (6) perforés posés directement dans lesdits moyens d'étanchéité.
